# EUROPÄISCHE PATENTSCHRIFT

(11) **EP 2 256 098 B1**
(45) Veröffentlichungstag und Bekanntmachung des Hinweises auf die Patenterteilung: **27.04.2011**
(21) Anmeldenummer: 09160774.7
(22) Anmeldetag: 20.05.2009
(51) Int. Cl.: C04B 26/02

(54) **Mittel zur Bodenverfestigung**
Product for ground consolidation
Produit pour consolidation du sol

(43) Veröffentlichungstag der Anmeldung: 01.12.2010
(73) Patentinhaber: Alpenbau GmbH, 39030 Terenten (IT)
(72) Erfinder: Niederkofler, Georg, 39030 Terenten (IT); Sigmund, Christian, 39040 Vahrn (IT)
(74) Vertreter: Becker Kurig Straus

(56) Entgegenhaltungen:
- US-A- 2 961 799
- US-A- 3 943 078
- US-A- 4 168 593
- US-A- 4 560 588

## Beschreibung

Die vorliegende Erfindung betrifft ein pulverförmiges Mittel zur Bodenverfestigung. Dieses kann in Wasser gelöst werden, um ein flüssiges Mittel zur Bodenverfestigung zu erhalten. Weiterhin betrifft die vorliegende Erfindung die Verwendung des erfindungsgemäßen pulverförmigen oder flüssigen Mittels zur Verfestigung von Erdbaustoffen im Neubau von Straßen und Verkehrsflächen, zur Sanierung von bestehenden Straßen und Verkehrsflächen, zur Herstellung von mineralischen Abdichtungsmaterialien für Deponien, Dämme, Deiche, und Speicherbecken und zur Herstellung von dränfähigen (wasserableitenden) Tragschichten im Straßen- und Verkehrswegebau.

### Stand der Technik

Im Zuge der zunehmenden Industrialisierung in vielen Ländern der Welt und einem sich ständig steigernden Mobilitätsbedürfnis der Menschen, kommt dem Straßen- und Wegebau eine immer größere Bedeutung zu.

Ein wichtiges Straßenbaumaterial ist der Beton. Beton ist ein vergleichsweise preiswerteres Material. Die für eine Betonmischung benötigten Materialien Zement, Wasser und ein Füllstoff, wie zum Beispiel Sand sind in weiten Teilen der Erde verhältnismäßig leicht verfügbar. Außerdem weist Beton eine gute Hitzebeständigkeit auf, so dass er auch bei extremer Sonneneinstrahlung nicht weich wird.

Um Straßen aus Beton bauen zu können, muss der Untergrund unter einer Betonplatte sehr fest sein. Andernfalls zerbrechen Betonplatten entweder oder sie setzen sich lokal, so dass es zu Kantenvorsprüngen kommt, die sowohl für die Automobile als auch für deren Fahrer eine extreme Belastung darstellen.

In vielen Gegenden dieser Erde ist der Boden allerdings nicht als Untergrund für Straßen oder andere Bauwerke aus Beton geeignet, da dieser einen hohen Sand-, Ton-, Lehm- und Schluffanteil aufweißt. Es wurden bereits mehrere Verfahren entwickelt um die Tragfähigkeit des Bodens zu erhöhen, unter anderem wurde der Boden mit Zement oder Kalk vermischt. Diese Ertüchtigungsmaßnahme dient der Verfestigung. Dieses Verfahren ist Bestandteil der Europäischen Norm EN 13242 in der Version 2008-03-01.

Dieses Verfahren ist jedoch nur bedingt für komplexe Bodenschichten geeignet, da diese oftmals mit organischem Material verunreinigt sind, und somit das Abbindeverhalten von Zement stark beeinträchtigt. Zusätzlich verleiht die Verwendung von Zement dem so verfestigten Boden eine hohe Sprödigkeit.

Weitere Mittel zur Bodenverfestigung sind in folgenden Dokumenten beschrieben:
US2961799 (Spalte 9, Beispiel X) beschreibt eine Methode zur Bodenverfestigung mit einem Mittel welches ein synthetisches Latex und Methylzellulose enthält.
US4168593 (Spalte 4, Beispiel 4) beschreibt eine Methode zur Bodenverfestigung mit einem Mittel, welches ein synthetisches Latex und Kalziumchlorid enthält.
US3943078 (Spalte 3, Beispiel 2) beschreibt ein Mittel zur Bodenverfestigung welches ein synthetisches Latex und Zellulose enthält.

Es stellt sich daher die Aufgabe Erdbaustoffe (Böden, Sand, Ton, Lehm, Schluff, etc.) zu verbessern, die mit herkömmlichen Methoden nicht mehr den Qualitätsansprüchen der spezifisch bezogenen Normen entsprechen. Durch die Verbesserung der Qualität von örtlich vorkommenden Erdbaustoffen, soll zudem die Umweltbilanz von Baumaßnahmen erhöht werden, beispielsweise durch die Reduzierung von Transporten. Die hierzu verwendeten Substanzen sollen kein Gefahrengut im Sinne von Transportvorschriften, nicht toxisch, wasserlöslich und umweltneutral sein.

### Beschreibung der Erfindung

Diese Aufgabe wird erfindungsgemäß durch ein pulverförmiges Mittel zur Bodenverfestigung gelöst, umfassend:
- a): einen Celluloseether,
- b): ein Alkalihydroxyd,
- c): Calciumchlorid,
- d): ein synthetischer Latex,
- e): amorphes pyrogenes Siliziumdioxid mit einer durchschnittlichen Partikelgröße im Bereich von 1 - 100 nm, und
- f): gegebenenfalls übliche Hilfs- und Zusatzstoffe.

Im Sinne dieser Erfindung wird hierbei unter "Boden" ein Boden im Außenbereich verstanden, insbesondere ein Erdboden oder Boden unter bestehenden Straßen und Verkehrsflächen.

Dieses pulverförmige Mittel ist eine wasserlösliche Polymerdispersion und hat bevorzugt die folgende Zusammensetzung:

| | | |
|---|---|---|
| a) | 1 - 5 Gew.-% | Celluloseether, |
| b) | 0,1 - 1 Gew.-% | Alkalihydroxyd, |
| c) | 5 - 25 Gew.-% | Calciumchlorid, |
| d) | mindestens 39 Gew.-% | synthetischer Latex, |
| e) | 5 - 15 Gew.-% | amorphes pyrogenes Siliziumdioxid, und |
| f) | 0 - 5 Gew.-% | übliche Hilfs- und Zusatzstoffe, |

wobei die Summe der Komponenten a) bis f) 100 Gew.-% ergibt.

Bei dem Celluloseether handelt es sich bevorzugt um Methylencelluloseether. Bei dem Alkalihydroxid handelt es sich bevorzugt um Natriumhydroxid. Bei dem synthetischen Latex handelt es sich bevorzugt um ein Polypropylen/Styrol-Butadien-Styrol (PP/SBS) Blockcopolymer.

Das amorphe pyrogene Siliziumdioxid weist bevorzugt eine durchschnittliche Partikelgröße im Bereich von 10 - 20 nm auf.

Das erfindungsgemäße Mittel kann projektspezifisch auch als flüssiges Mittel eingesetzt werden. Dieses erhält man durch Lösen von einem Gewichtsteil des erfindungsgemäßen pulverförmigen Mittels in 2 bis 4 Gewichtsteilen Wasser.

Das erfindungsgemäße Mittel wird zusammen mit einem Bindemittel mit Erdbaustoffen abgemischt und ausgebracht. Dies verleiht Erdbaustoffen eine höhere Festigkeit, erhöht ihre Flexibilität, reduziert die Aufnahmefähigkeit von Wasser und die Empfindlichkeit gegen Frost-Tau-Salz-Angriffe. Außerdem wird die Anfälligkeit gegen organische Bestandteile herabgesetzt. Zusätzlich wird die Verarbeitbarkeit der Erdbaustoffe verbessert.

Bei der Stabilisierung bzw. Verfestigung von Erdbaustoffen im Neubau von Straßen und Verkehrsflächen dient das erfindungsgemäße Mittel der Verbesserung von ungeeigneten Erdbaustoffen in Kombination mit Zement, Kalk oder Zement/Kalkgemisch. Das Erdbaumaterial wird hierzu mit Zement und/oder Kalk nach einer Rezeptur gemäß einer vorangegangenen Eignungsprüfung gemäß den vorgeschriebenen Leistungsdaten des Bauwerkes abgemischt und als Planum, Straßenunterbau oder Tragschicht eingebaut. Hierbei kann das Mischgut in situ mittels spezieller Stabilisierfräsen und herkömmlichen Erdbaumaschinen eingebaut werden, oder vor Ort mit geeigneten mobilen Mischanlagen hergestellt und mit herkömmlichen Erdbaumaschinen eingebaut werden.

Das erfindungsgemäße Mittel kann auch zur Sanierung von bestehenden Straßen und Verkehrsflächen verwendet werden. Bestehende Straßen verlieren mit der Zeit die notwendige Tragfähigkeit, was zu hohen Kosten für die Instandhaltung führt. Gemäß dem Stand der Technik muss der Straßenkörper sanierungsbedürftiger Straßen ausgekoffert werden und mit qualitativ hochwertigem Material neu aufgebaut werden. Mit dem erfindungsgemäßen Mittel kann der bestehende Boden in situ verbessert werden. Hierbei kann auch der Asphalt mit eingearbeitet werden. Dieses Verfahren spart viel Zeit und Kosten gegenüber den Verfahren des Standes der Technik.

Das erfindungsgemäße Mittel kann auch zur Herstellung von mineralischen Abdichtungsmaterialien für Deponien, Dämme, Deiche und Speicherbecken verwendet werden. Das erfindungsgemäße Mittel dient hierbei der Stabilisierung und Steuerung von Erdbaustoffen in Verbindung mit tonmineralischen Dichtungsbaustoffen für die Herstellung einer Abdichtungsschicht mit äußerst geringer Wasserdurchlässigkeit. Als Material können sowohl herkömmliche Sande und Kiese verwendet werden, als auch Reststoffe wie beispielsweise Recyclingmaterial, Flugaschen, Hafenschlick und Klärschlamm. Dieses Material wird mit herkömmlichen Mischanlagen, nach überprüfter Rezeptur gemäß einer vorangegangenen Eignungsprüfung, abgemischt und mit geeignetem Baugerät bedarfsgerecht eingebaut.

Schließlich kann das erfindungsgemäße Mittel zur Herstellung von dränfähigen (wasserableitenden) Tragschichten im Straßen- und Verkehrswegebau verwendet werden. Das erfindungsgemäße Mittel dient hierbei zur Herstellung von hydraulisch gebundenen Tragschichten nach definierter Sieblinie von mineralischen Zuschlagstoffen mit Zement, wobei das erfindungsgemäße Mittel dem Zement eine hohe Adhäsivität und Flexibilität verleiht und dadurch Spannungsrisse vermieden werden.

Die vorliegende Erfindung wird im Folgenden durch ein Beispiel veranschaulicht, welches nicht einschränkend zu verstehen ist.

### Beispiel

Ein beispielhaftes pulverförmiges Mittel gemäß der Erfindung besteht aus folgenden Komponenten:

| | |
|---|---|
| 2,50 Gew.-% | Methylencelluloseether, |
| 0,25 Gew.-% | Natriumhydroxyd, |
| 15,00 Gew.-% | Calciumchlorid, |
| 70,25 Gew.-% | Polypropylen/Styrol-Butadien-Styrol (PP/SBS) Blockcopolymer, und |
| 11,00 Gew.-% | amorphes pyrogenes Siliziumdioxid mit einer durchschnittlichen Partikelgröße von 15 mm. |

| | |
|---|---|
| Alle verwendeten Komponenten sind kommerziell erhältlich. | |

Um ein flüssiges erfindungsgemäßes Mittel zu erhalten, wird 1 Gewichtsteil des zuvor erwähnten pulverförmigen Mittels in 2,7 Gewichtsteilen Wasser dispergiert. Dadurch wird ein Mittel der folgenden Zusammensetzung erhalten:

## Patentansprüche

1. Pulverförmiges Mittel zur Bodenverfestigung, umfassend:
a) einen Celluloseether,
b) ein Alkalihydroxyd,
c) Calciumchlorid,
d) einen synthetischen Latex,
e) amorphes pyrogenes Siliziumdioxid mit einer durchschnittlichen Partikelgröße im Bereich von 1 - 100 nm,
f) gegebenenfalls übliche Hilfs- und Zusatzstoffe.

2. Pulverförmiges Mittel nach Anspruch 1, **gekennzeichnet durch** die folgende Zusammensetzung:
| | | |
|---|---|---|
| a) | 1 - 5 Gew.-% | Celluloseether, |
| b) | 0,1 - 1 Gew.-% | Alkalihydroxyd, |
| c) | 5 - 25 Gew.-% | Calciumchlorid, |
| d) | mindestens 39 Gew.-% | synthetischer Latex, |
| e) | 5 - 15 Gew.-% | amorphes pyrogenes Siliziumdioxid, |
| f) | 0 - 5 Gew.-% | übliche Hilfs- und Zusatzstoffe, |
wobei die Summe der Komponenten a) bis f) 100 Gew.-% ergibt.

3. Pulverförmiges Mittel nach einem der vorhergehenden Ansprüche, **dadurch gekennzeichnet, dass** es sich bei dem Celluloseether um Methylencelluloseether handelt.

4. Pulverförmiges Mittel nach einem der vorhergehenden Ansprüche, **dadurch gekennzeichnet, dass** es sich bei dem Alkalihydroxid um Natriumhydroxid handelt.

5. Pulverförmiges Mittel nach einem der vorhergehenden Ansprüche, **dadurch gekennzeichnet, dass** es sich bei dem synthetischen Latex um ein Polypropylen/Styrol-Butadien-Styrol Blockcopolymer handelt.

6. Pulverförmiges Mittel nach einem der vorhergehenden Ansprüche, **dadurch gekennzeichnet, dass** das amorphe pyrogene Siliziumdioxid eine durchschnittliche Partikelgröße im Bereich von 10 - 20 nm aufweist.

7. Flüssiges Mittel zur Bodenverfestigung, **dadurch gekennzeichnet, dass** es durch Lösen von einem Gewichtsteil des pulverförmigen Mittels zur Bodenverfestigung gemäß einem der vorhergehenden Ansprüche in 2 bis 4 Gewichtsteilen Wasser erhältlich ist.

8. Verwendung des Mittels nach einem der vorhergehenden Ansprüche zur Verfestigung von Erdbaustoffen im Neubau von Straßen und Verkehrsflächen, **dadurch gekennzeichnet, dass** das Mittel mit Zement und/oder Kalk abgemischt wird und zu einem Planum, einem Straßenunterbau oder einer Tragschicht weiterverarbeitet wird.

9. Verwendung des Mittels nach einem der Ansprüche 1 - 7 zur Sanierung von bestehenden Straßen und Verkehrsflächen, **dadurch gekennzeichnet, dass** das Mittel mit Zement und/oder Kalk abgemischt wird, wobei der Asphalt der Straße oder Verkehrsfläche mit eingearbeitet wird.

10. Verwendung des Mittels nach einem der Ansprüche 1 - 7 zur Herstellung von mineralischen Abdichtungsmaterialien für Deponien, Dämme, Deiche, und Speicherbecken, **dadurch gekennzeichnet, dass** das Mittel mit Sanden, Kiesen und/oder Reststoffen abgemischt wird.

11. Verwendung des Mittels nach Anspruch 10, **dadurch gekennzeichnet, dass** die Reststoffe ausgewählt sind aus der Gruppe bestehend aus Recyclingmaterial, Flugasche, Hafenschlick und Klärschlamm.

12. Verwendung des Mittels nach einem der Ansprüche 1 - 7 zur Herstellung von dränfähigen Tragschichten im Straßen- und Verkehrswegebau, **dadurch gekennzeichnet, dass** das Mittel mit mineralischen Zuschlagstoffen und Zement vermischt wird.

## Claims

1. A pulverulent medium for ground reinforcement, comprising:
a) a cellulose ether,
b) an alkali hydroxide,
c) calcium chloride,
d) a synthetic latex,
e) amorphous pyrogenic silicon dioxide with a mean particle size in the range of 1-100 nm,
f) optionally further auxiliary substances and additives.

2. The pulverulent medium according to claim 1, **characterised by** the following composition:
| | | |
|---|---|---|
| a) | 1-5 wt. % | of cellulose ether, |
| b) | 0.1-1 wt. % | of alkali hydroxide, |
| c) | 5-25 wt. % | of calcium chloride, |
| d) | at least 39 wt. % | of synthetic latex, |
| e) | 5-15 wt. % | of amorphous pyrogenic silicon dioxide, |
| f) | 0-5 wt. % | of further auxiliary substances and additives, |
the sum of components a) to f) equalling 100 wt. %.

3. The pulverulent medium according to any one of the preceding claims, **characterised in that** the cellulose ether is methylene cellulose ether.

4. The pulverulent medium according to any one of the preceding claims, **characterised in that** the alkali hydroxide is sodium hydroxide.

5. The pulverulent medium according to any one of the preceding claims, **characterised in that** the synthetic latex is a polypropylene/styrene-butadiene-styrene block copolymer.

6. The pulverulent medium according to any one of the preceding claims, **characterised in that** the amorphous pyrogenic silicon dioxide has a mean particle size in the range of 10-20 nm.

7. A liquid medium for ground reinforcement, **characterised in that** it is obtainable by dissolving a part by weight of the pulverulent medium for ground reinforcement according to any one of the preceding claims in 2 to 4 parts by weight of water.

8. A use of the medium according to any one of the preceding claims for the reinforcement of primary construction materials when constructing new roads and traffic surfaces, **characterised in that** the medium is mixed with cement and/or lime and is processed to form a subgrade, a road foundation or a base course.

9. The use of the medium according to any one of claims 1 to 7 for the renewal of existing roads and traffic surfaces, **characterised in that** the medium is mixed with cement and/or lime, the asphalt of the road or traffic surface being incorporated.

10. The use of the medium according to any one of claims 1 to 7 for the production of mineral sealing materials for landfills, dams, embankments and reservoirs, **characterised in that** the medium is mixed with sands, gravel and/or recyclings.

11. The use of the medium according to claim 10, **characterised in that** the recyclings are selected from the group consisting of recycling material, fly ash, harbour silt and sludge.

12. The use of the medium according to any one of claims 1 to 7 for the production of drainable base courses in road and traffic route construction, **characterised in that** the medium is mixed with mineral aggregates and cement.

## Revendications

1. Produit pulvérulent pour la consolidation de sols, comprenant :
a) un ester de cellulose
b) un alcali caustique
c) du chlorure de calcium
d) un latex synthétique
e) du dioxyde de silicium pyrogène amorphe d'une grandeur moyenne des particules de l'ordre de 1 à 100 nm
f) le cas échéant, des matières auxilaires et adujvants conventionnels

2. Produit pulvérulent selon la revendication 1, **caractérisé par** la composition suivants :
| | | |
|---|---|---|
| a) | 1 à 5 % en poids | ester de cellulose |
| b) | 0,1 à 1 % en poids | alcali caustique |
| c) | 5 à 25 % en poids | chlorure de calcium |
| d) | au moins 39 % en poids | latex synthétique |
| e) | 5 à 15 % en poids | dioxyde de silicium pyrogène amorphe |
| f) | 0 à 5 % en poids | de matières auxiliaires et adjuvants conventionnels |
la somme des composants a) poids. à f) étant de 100 % en poids.

3. Produit pulvérulent selon l'une quelconque des revendications précédentes, **caractérisé en ce que** l'ester de cellulose est un ester méthylique de cellulose.

4. Produit pulvérulent selon l'une quelconque des revendications précédentes, **caractérisé en ce que** l'alcali caustique est de l'hydroxyde de sodium.

5. Produit pulvérulent selon l'une quelconque des revendications précédentes, **caractérisé en ce que** le latex synthétique est un polymère bloc de polyprolylène/styrène/butadiène/styrène.

6. Produit pulvérulent selon l'une quelconque des revendications précédentes, **caractérisé en ce que** le dioxyde de silicium pyrogène amorphe présente une grandeur moyenne de particules de l'ordre de 10 à 20 nm.

7. Produit liquide pour la consolidation de sols, **caractérisé en ce qu'**il peut s'obtenir par dissolution d'une part en poids du produit pulvérulent pour la consolidation de sols selon l'une quelconque des revendications précédentes dans de 2 à 4 parts en poids d'eau.

8. Utilisation du produit selon l'une quelconque des revendications précédentes pour la consolidation de matières de terrassement pour la construction de routes et surfaces de circulation neuves, **caractérisé en ce qu'**on mélange le produit avec du ciment et/ou de la chaux et on le remet en oeuvre en une plateforme de chaussée, en une substructure routière ou en une couche porteuse.

9. Utilisation du produit selon l'une quelconque des revendications 1 à 7 pour l'assainissement de routes et surfaces de circulation existantes, **caractérisée en ce qu'**on mélange le produit avec du ciment et/ou de la chaux, en co-incorportant l'asphalte de la route ou de la surface de circulation.

10. Utilisation du produit selon l'une quelconque des revendications 1 à 7 pour la production de matières d'étanchéité minérales pour des décharges, digues, remblais et réservoirs, **caractérisée en ce qu'**on mélange le produit avec des sables, graviers et/ou sous-produits.

11. Utilisation du produit selon la revendication 10, **caractérisée en ce que** les sous-produits sont choisis dans le groupe consistant dans des matières de recyclage cendres volantes, boues portuaires et boues de curage.

12. Utilisation du produit selon l'une quelconque des revendications 1 à 7 pour la production de couches porteuses drainantes dans la construction des routes et des chemins de circulation, **caractérisée en ce qu'**on mélange le produit à des granulatés minéraux et à du ciment.
